Europäisches Patentamt

European Patent Office

Office européen des brevets

(11) Veröffentlichungsnummer: **0 278 989 B1**

(12) **EUROPÄISCHE PATENTSCHRIFT**

(45) Veröffentlichungstag der Patentschrift: **03.06.92**

(21) Anmeldenummer: **87100073.3**

(22) Anmeldetag: **06.01.87**

(51) Int. Cl.⁵: **G09B 21/00**

(54) **Vorrichtung zur Willensäusserung durch einzeln ausgewählte Symbole seitens behinderter Personen.**

(43) Veröffentlichungstag der Anmeldung:
**24.08.88 Patentblatt 88/34**

(45) Bekanntmachung des Hinweises auf die
Patenterteilung:
**03.06.92 Patentblatt 92/23**

(84) Benannte Vertragsstaaten:
**CH DE FR GB LI**

(56) Entgegenhaltungen:
**EP-A- 0 061 146**
**US-A- 4 293 855**

**PROCEEDINGS OF THE NATIONAL COMPU-
TER CONFERENCE, New York, 7.-10. Juni
1976, Band 45, Seiten 209-216, AFIPS, Montvale, US; G.A. RAITZER et al.: "Interfacing
computers for the physically handicapped -
A review of international approaches"**

**IEEE ENGINEERING IN MEDICINE AND BIO-
LOGY, Band 1, Nr. 4, Dezember 1982, Seiten
31-35, IEEE, New York, US; M.J. ROSEN et al.:
"Communication systems for the non-vocal
motor handicapped: practice & prospects"**

(73) Patentinhaber: **Ruscello, Lorenzo**
**Via E. De Amicis 49**
**I-10093 Collegno Torino(IT)**

(72) Erfinder: **Ruscello, Lorenzo**
**Via E. De Amicis 49**
**I-10093 Collegno Torino(IT)**

(74) Vertreter: **Lotti, Giorgio**
**c/o Ing. Barzano' & Zanardo S.p.A. Via Cernaia 20**
**I-10122 Torino(IT)**

**Beschreibung**

Die Erfindung betrifft eine elektronische Vorrichtung, die infolge Krankheit oder Verletzung am Sprechen und Schreiben gehinderten Personen gestattet, ihren Willen durch einzeln auswählbare Buchstaben, Zahlen und Symbole unter Bildung entsprechender Sätze auf einem Bildschirm-Monitor zu äussern.

Wie bekannt, gibt es Krankheiten oder Verletzungen, wie z.B. Lähmung, durch welche die davon befallene Person nicht mehr in der Lage ist zu sprechen und zu schreiben, während ihre Geistes- und Sehkräfte unversehrt bleiben. Solche Personen sind dann daran gehindert, ihren Willen zu äussern.

Der Erfindung liegt die Aufgabe zugrunde, diesem Mangel abzuhelfen und hierzu eine elektronische Vorrichtung vorzusehen, die einer infolge Krankheit oder Verletzung zu sprechen und schreiben unfähigen Person gestattet, durch einzeln auswählbare Buchstaben. Zahlen und Symbole unter Bildung von Worten oder Sätzen auf einem Bildschirm-Monitor zu äussern.

Weiterhin soll sich diese Vorrichtung durch einfachen Aufbau, leichte Gebrauchsweise und sichere Zuverlässigkeit auszeichnen.

Das Dokument EP-A-0061 146 beschreibt eine elektronische Vorrichtung zur Willensäusserung durch einein ausgewählte Buchstaben, Zahlen und Symbole seitens durch Krankheit oder Verletzung am Sprechen und Schreiben behinderter Personen, die folgende Bauteile umfasst: eine Tafel mit allen Buchstaben des Alphabets und wenigstens den Zahlen von 0 bis 9 sowie weiteren Symbolen und mit im Dereich der Buchstaben, Zahlen und Symbole jeweils einem elektrisch einschaltbaren und mit zyklisch kontinuierlicher Folge von einem Buchstaben, einer Zahl und einem Symbol zum anderen aufleuchtendem Leuchtmittel, einen im elektrischen Stromkreis mit der Tafel verbundenen zyklischen Signalgeber, einen Sensor zum Schliessen und öffnen des elektrischen Stromkreises, einen an sich bekannten nicht-flüchtigen Speicher.

Nun schlägt die Erfindung vor, erwähnte Vorrichtung zu verbessern und hierzu sie mit einem weiteren Sensor vorzusehen, der durch Wahl eines speziellen Symbols vom Patienten oder auch von anderen Personen betätigt werden kann, um den Inhalt der auf dem Bildschirm-Monitor vorhandenen Informationen anzuzeigen.

Um diesen und weitere Vorteile hinsichtlich der bekannten Technik zu erzielen, schlägt die Erfindung vor, eine elektronische Vorrichtung zu realisieren, die die Willensäusserung durch ausgewählte Symbole seitens der Patienten gestattet, wie im Anspruch 1 beansprucht. Vorteilhafte Weiterbildungen der Erfindung ergeben sich aus den Unteransprüchen 2 bis 5.

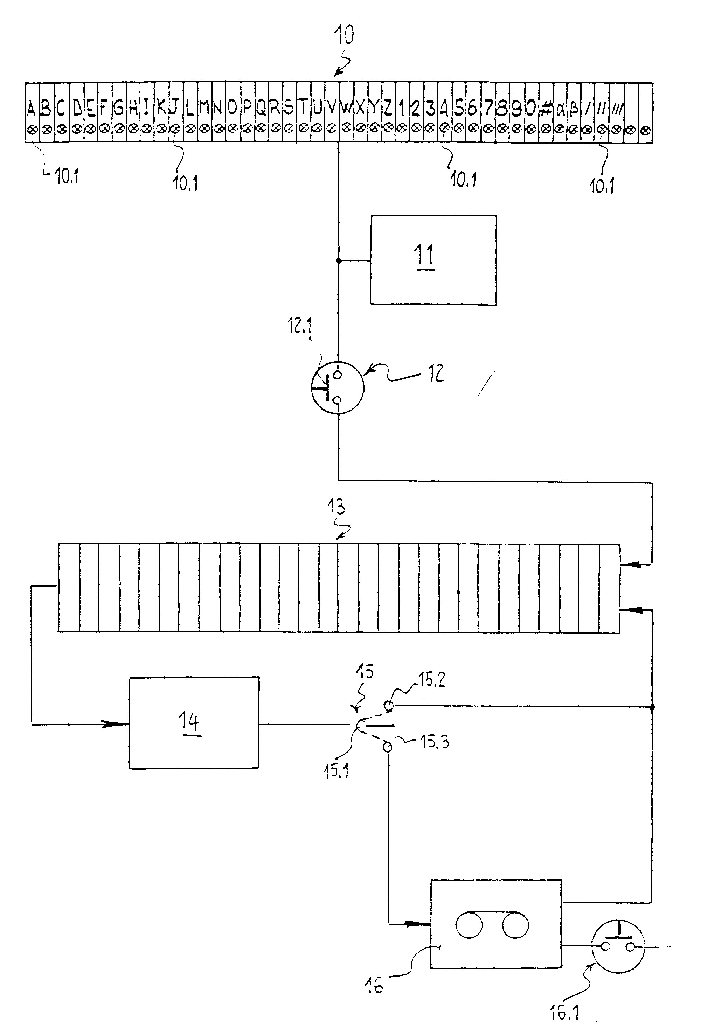

Die Erfindung wird nachstehend anhand eines in der Zeichnung dargestellten Ausführungsbeispiels näher erläutert.

Die einzige Figur der Zeichnung zeigt eine schematische übersicht der erfindungsgemässen Vorrichtung in Form eines Blockschaltbildes und in flacher Abwicklung.

Mit Bezug auf die Zeichnung ist mit 10 eine Tafel mit allen in geordneter Folge abgebildeten Buchstaben des Alphabets, den Zahlen vor, 0 bis 9 und weiteren Symbolen bezeichnet. Allen Buchstaben, Zahlen und Symbolen dieser Tafel ist jeweils ein elektrisch einschaltbares Leuchtmittel 10.1, wie z.B. eine übliche elektrische Birne oder eine Leuchtdiode, zugeordnet, wobei diese Leuchtmittel 10.1 jeweils in an sich bekannter und daher nicht näher dargestellter Weise am elektrischen Stromnetz angeschlossen sind.

Ein mit 11 bezeichneter, an sich bekannter zyklischer Signalgeber ist mit dem elektrischen Stromkreis der erwähnten Leuchtmittel 10.1 verbunden und dient dazu, diese Leuchtmittel 10.1 der Tafel 10 gemäss einer voreingestellten zyklischen Wiederholungsfolge von elektrischen Signalen einzuschalten bzw. aufleuchten zu lassen. So erfolgt über diesen zyklischen Signalgeber 11 eine kontinuierliche und zyklische Abtastung oder Abfrage der geordneten Folge von Buschstaben, Zahlen und Symbole der Tafel 10, wobei diese Abtastung durch die Aufleuchtfolge jeweils eines der Leuchtmittel 10.1 von einem der erwähnten Zeichen zum andern sichtbar angezeigt wird.

Ein mit 12 bezeichneter Sensor dient zum Schliessen und Öffnen des elektrischen Stromkreises und steuert hierzu einen elektrischen Schalter 12.1, der mit der elektrischen Leitung des zyklischen Signalgebers 11 verbunden und normalerweise in Offenstellung der erwähnten Leitung gehalten ist. Der Sensor 12 erfasst als Eingangssignal eine besondere Muskel- oder Sprechlautreaktion des Patienten und formt diese in ein Ausgangssignal zum Steuern des erwähnten Schalters 12.1 in Öffnungs- oder Schliesstellung um.

So kann der Sensor 12 für Patienten, die z.B. den unversehrten Gebrauch der Hand besitzen, als an sich bekannter pneumatischer Sensor ausgebildet sein, wobei dessen elektrischer Kontakt über eine Membran in den Öffnungs-oder Schliesszustand des elektrischen Stromkreises betätigt werden kann.

Für Patienten, deren Muskeltätigkeit nur mit Unsicherheit bewirkt werden kann, z.B. infolge Tremors der Hände oder anderer zur Betätigung des Sensors 12 geeigneter Körperteile, kann der Sensor vorzugsweise als an sich bekannter Druckwandler zur Umwandlung des vom Pateinten ausgeübten Druckes in ein proportionales elektronisches Signal ausgebildet sein. Eventuelle momentane Schwankungen des Wertes des ausgeübten Druckes, die z.B. durch Zittern des den Sensor betätigenden Patienten verursacht werden, können in solchem Fall elektronisch integriert und dann filtriert werden, um so ein elektronisches Ausgangssignal z.B. nur bei Überschreitung eines vorbestimmten Schwellwertes des Eingangsdruckes zu erhalten.

Für Patienten, die ihren Willen nur durch Kontraktion eines Muskels, z.B. des Besichtes, einer Hand oder eines Armes kundgeben können, kann der Sensor als an sich bekannter Widerstandsdehnungsmesser (strain gage) ausgebildet und mittels eines Klebstreifens an den wirksamen Muskelbereich des Patienten festgesetzt werden, wobei dann das Ausgangssignal des Sensors mittels eines entsprechenden Verstärkers zweckmässig verstärkt werden kann.

Für Patienten, die ihren Willen nur durch einen Laut der Stimme äussern können, kann der Sensor 12 in an sich bekannter Weise als Mikrophon ausgebildet sein, wobei dieses z.B. mittels eines Klebestreifens am Hals des Patienten befestigt wird und dessen Signal wiederum zweckmässiger Weise verstärkt werden kann.

Mit 13 ist ein an sich bekannter Bildschirm-Monitor mit Kathodenstrahlröhre bezeichnet, der im elektrischen Stromkreis dem Sensor 12 nachgeschaltet und mit diesem Sensor 12, dem zyklischen Signalgeber 11, der Tafel 10 und den Leuchtmitteln 10.1 verbunden ist. Dem dargestellten Ausführungsbeispiel entsprechend ist der Monitor 13 befähigt, vom Patienten durch Betätigung des sensors 12 einzeln ausgewählte Zeichen sichtbar wiederzugeben und zwar während der zyklischen Abtastung der Buchstaben, Zahlen und Symbole der Tafel 10, wie noch näher zur Beschreibung gelangen wird, die nacheinander in den Bildschirm-Monitor 13 beispielsweise durch Verschiebung von rechts nach links nach der sogenannten Methode "Erster ein - Erster aus" (first-in, first-out) eingegeben werden.

Der Bildschirm-Monitor 13 ist seinerseits im elektrischen Stromkreis mit einem an sich bekannten, sogenannten nicht-flüchtigen Speicher 14 verbunden, wobei diesem Speicher die vorher auf dem Monitor 13 erschienenen und vom selben infolge der Sättigung der Zeile des Monitors allmählich verschwundenen Zeichen sequentiell zugeführt werden.

Mit 15 ist ein elektrischer Dreiwegschalter bezeichnet, dessen Mittelstellung dem Offenzustand des Stromkreises entspricht und in der dieser Schalter 15 normalerweise gehalten ist. Der Dreiwegschalter 15 ist im Stromkreis dem genannten nicht-flüchtigen Speicher 14 nachgeschaltet, mit seinem Eingang 15.1 an diesen Speicher 14 angeschlossen und mit einem Ausgang 15.2 an den Bildschirm-Monitor 13 angeschlossen, wodurch er durch die Wahl eines vorbestimmten Symbols der Tafel 10 seiten des Patienten in den Schliesszustand (15.2) des Rückstromkreises zwischen dem nicht-flüchtigen Speicher 14 und dem Bildschirm-Monitor 13 umschaltbar ist.

Ein mit 16 bezeichneter Grossspeicher, z.B. ein herkömmliches Tonbandgerät, ist ebenfalls in den Stromkreis einbezogen und mit seinem Eingang an den anderen Ausgang 15.3 des elektrischen Dreiwegschalters 15 sowie mit seinem Ausgang an den Bildschirm-Monitor 13 angeschlossen.

Nach der Sättigung der Speicherungskapazität des nicht-flüchtigen Speichers 14, wird der Dreiwegschalter 15 infolge der automatischen Eingabe und sequentiellen Speicherung der Buchstaben, Zahlen und Symbole, die vom Monitor 13 eintreffen, automatisch in den Schliesszustand (15.3) des den Speicher 14 und den Grossspeicher 16 verbindenden Stromkreises geschaltet, wobei die im nicht-flüchtigen Speicher 14 gespeicherten Buchstaben, Zahlen und Symbole in den Grossspeicher 16 gelangen und dort gespeichert werden, während dadurch der Speicher 14 entleert wird.

Durch die mittels Betätigung des Sensors 12 vom Patienten erfolgte Wahl eines vorbestimmten Symbols während der zyklischen Abtastung der Symbole auf der Tafel 10, werden die Buchstaben, Zahlen und Symbole dem Bildschirm-Monitor 13 zurückgeleitet, auf dem sie in geordneter Folge, z.B. durch Verschiebung von rechts nach links, unter bildung der vorher vom Patienten eingegebenen Worte oder Sätze aufscheinen.

Mit 16.1 ist ein zusätzlicher Sensor bezeichnet, der z.B. als elektrischen Druckknopfschalter ausgebildet ist und zum Öffnen und Schliessen des elektrischen Stromkreises zwischen dem Grossspeicher 16 und dem Bildschirm-Monitor 13 dient. Dieser zusätzliche Sensor 16.1 befindet sich normalerweise in Offenstellung fürden zugehörigen Stromkreis und kann wahlweise vom Patienten wie auch von anderen Personen, die am Informationsinhalt des Grossspeichers 16 interessiert sind, betätigt werden.

Die Schaltungsmittel, die die erfindungsgemässe Vorrichtung zusammensetzen, werden operativ und funktionell gesteuert durch eine entsprechende elektronische Verarbeitungs- und Rechnereinheit, die an sich bekannt und daher hier nicht abgebildet ist.

Funktionsweise

Da die Vorrichtung an des Stromnetz angeschlossen ist, wird an Hand der Tafel 10 mit den Buchstaben, Zahlen und Symbolen, die für den mit dem Sensore 12 ausgerüsteten Patienten gut sichtbar angeordnet sind, und durch den zyklischen Signalgeber 11 eine kontinuierliche und wiederholbare zyklische Abtastung der geordneten Folge der Buchstaben, Zahlen und Symbole der Tafel 10 durchgeführt. Diese Abtastung wird für den Patienten für eine bestimmte Zeit auf der Tafel 10 durch das aufeinander folgende Aufleuchten der Leuchtmittel 10.1, die jeweils einem der genannten Zeichen zugeordnet sind, sichtbar angezeigt.

Beim Aufleuchten des Leuchtmittels 10.1, das auf der Tafel 10 den Buchstaben, die Zahl oder das Symbol zur Bildung des gewünschten Wortes anzeigt, betätigt der Patient den Sensor 12 durch Handdruck, Muskelkontraktion oder einen Laut je nach Ausführungsart des Sensors, wodurch über diesen Sensor der elektrische Stromkreis zwischen dem aufgeleuchteten Leuchtmittel 10.1 auf der Tafel 10, dem zyklischen Signalgeber 11 und dem Bildschirm-Monitor 13 geschlossen wird. Dies bewirkt das Erscheinen des vom Leuchtmittel 10.1 auf der Tafel 10 beleuchteten Zeichens auf dem Bildschirm-Monitor 13. Sobald die vom Patienten auf den Sensor 12 ausgeübte Betätigung aufhört, wird die zyklische Abtastung der Buchstaben, Zahlen und Symbole auf der Tafel wieder aufgenommen und der Patient wiederholt den beschriebenen Vorgang bei jeder zyklischen Abtastung, indem er die zur Bildung des gewünschten Wortes nötigen Buchstaben, Zahlen oder Symbole einzeln auswählt, wobei dieses Wort auf dem Bildschirm-Monitor 13 durch sequentielle Verschiebung nach links der gewählten und angezeigten Buchstaben, Zahlen und Symbole bis zur Eingabe des unter Bezugnahme auf das in der Zeichnung dargestellte Ausführungsbeispiel letzten am rechten Ende ausgewählten Zeichens wiedergegeben wird. Bei Sättigung der Zeile, die im dargestellten Ausführungsbeispiel insgesamt achtundzwanzig Zeichen umfasst, verschwindet das erste ausgewählte Zeichen - Buchstabe, Zahl oder Symbol - vom Bildschirm des Monitors 13 und wird automatisch in den nicht-flüchtigen Speicher 14 eingegeben und dort gespeichert.

Durch weitere Auswahl von Buchstaben, Zahlen und Symbolen bildet so der Patient ein oder mehrere Worte bzw. Sätze, um auf diese Weise sein Begehren kundzutun.

Soll nun die so kundgegebene, aber nicht mehr sichtbare Äusserung des Patienten am Bildschirm-Monitor 13 nochmals gelesen oder anderen Personen gezeigt werden, so wählt der Patient mit dem Sensor 12 während der zyklischen Abtastung der Tafel 10 ein vorbestimmtes Symbol derselben, z.B. $\alpha$. Dadurch wird nun am Bildschirm-Monitor 13 nicht dieses Symbol $\alpha$, sondern es wird der Dreiwegschalter 15 in Schliesszustand (15.2) des elektrischen Stromkreises zwischen dem nicht-flüchtigen Speicher 14 und dem Bildschirm-Monitor 13 umgeschaltet, weswegen auf dem Bildschirm die vom Patienten gebildeten Worte oder Sätze in geordneter Folge von rechts nach links aufscheinen.

Sobald der Schwellwert der Speicherkapazität des nicht-flüchtigen Speichers 14 erreicht ist, schaltet der Dreiwegschalter 15 automatisch auf Schliesszustand (15.3) des Stromkreises zum Grossspeicher 16 um und die im Speicher 14 bisher eingegebenen Buchstaben, Zahlen und Symbole werden in den Grossspeicher 16 überführt und dort gespeichert, während der nicht-flüchtige Speicher 14 nunmehr entleert ist.

Der Patient kann die im Grossspeicher 16 enthaltenen Informationen aber auch aus demselben abrufen und auf dem Bildschirm-Monitor 13 aufscheinen lassen, indem er mittels des Sensors 12 während der zyklischen Abtastung der Tafel 10 ein vorbestimmtes Symbol, z.B. $\beta$, diesen Informationsinhalt abruft.

Es versteht sich, dass auch andere Personen die Information aus dem Grossspeicher abrufen können, und zwar durch Betätigen des diesem Grossspeicher 16 zugeordneten zusätzlichen Schalters 16.1.

Auf der Tafel 10 sind noch weitere konventionelle Symbole vorhanden, die vom Patienten durch den Sensor 12 gewählt werden können, z.B. das Symbol "#", um einen Zwischenraum zwischen den einzelnen Worten auf dem Bildschirm-Monitor 13 zu bilden; das Symbol "/", um das letztgewählte Zeichen am Bildschirm-Monitor 13 zu löschen; das Symbol "//", um das zuletzt am Bildschirm-Monitor 13 erschienene Zeichen zu löschen; das Symbol "///", um die zuletzt am Bildschirm-Monitor wiedergegebene Zeile zu löschen.

Weitere Symbole, die in der Zeichnung nicht dargestellt sind, können noch auf der Tafel 10 vorgesehen sein und über den Sensor 12 zur Aktivierung weiterer Funktionen auf den Bildschirm-Monitor 13 aufgerufen werden. Es kann sich beispielsweise um logisch-mathematische Symbole handeln, um ein oder mehr Symbole, die dem Patienten gestatten, die Dauer des Aufleuchtens der Lampen 10.1 und somit die Geschwindigkeit der zyklischen Abtastung der Tafel 10 zu bestimmen, um ein oder mehr Symbole zur Überprüfung des Funktionszustandes des Grossspeichers 16, und wenn im elektrischen Stromkreis der elektronischen Vorrichtung gemäss der Erfindung ein Schall-Synthetisator vorgesehen ist, ein Symbol zur Auswahl eines akustischen Alarm-Signals.

Es versteht sich, dass im Einklang mit den physikalischen und programmbezogenen Merkmalen der Verarbeitungs- und Rechnereinheit der erfindungsgemässen Vorrichtung vom Patienten verschiedene Befehle durch Zusammenstellen von Worten, die solchen Befehlen entsprechen, dieser Vorrichtung erteilt werden können. Es ist auch möglich, an die elektronische Vorrichtung gemäss der Erfindung weitere Zusatzgeräte anzuschliessen, z.B. einen Drucker zur Klarwiedergabe des im Grossspeicher vorhandenen Informationsinhaltes.

Wie aus dem Vorstehenden hervorgeht, sind Personen, die infolge Krankheit oder Verletzung nicht sprechen und schreiben können, deren Geistes- und Sehkräfte jedoch im wesentlichen unversehrt geblieben sind, in der Lage, mittels der erfindungsgemässen Vorrichtung in einfacher und sicherer Weise durch einzeln ausgewählte Buchstaben, Zahlen und Symbole die gewünschten Äusserungen auf einem Bildschirmgerät sichtbar kundzutun.

Ausserdem zeichnet sich diese Vorrichtung durch einfachen Aufbau, leichte Gebrauchsweise und hohe Zuverlässigkeit aus.

Die erfindungsgemässe Vorrichtung ist unter Bezugnahme auf eine vereinfachte Ausführungsform beschrieben und dargestellt worden. Es sind aber bei der praktischen Durchführung verschiedene Abwandlungen möglich.

So z.B. kann die Tafel 10 durch eine drehbare Scheibe oder Trommel mit den Buchstaben des Alphabets, den Zahlen von 0 bis 9 und weiteren Symbolen und mit einer feststehenden Sichtanzeige für die durch den Sensor 12 ausgewählten Zeichen ersetzt sein. In diesem Fall können die Erfassung und Wiedergabe der vom Patienten gewählten Zeichen mit Hilfe eines mit dem Stromkreis des Bildschirm-Monitors 13 verbundenen optischen Lesegerätes erfolgen.

Ausserdem kann anstatt eines Kathodenstralröhren-Sichtgerätes ein Flüssigkristall-Sichtgerät Verwendung finden.

Der Grosspeicher kann anstatt als übliches Tondbandgerät als Kleinplatten-Aufnahmegerät ausgeführt sein. Die Tafel 10 kann offensichtlich die Buchstaben eines anderen Alphabets und andere Symbole als die beispielsweise beschriebenen und dargestellten aufweisen.

Um dem durch Ausfall der Stromversorgung verursachten Mangel abzuhelfen, kann der vom Sensor 12 ausgehende Stromkreis zuerst zum nicht-flüchtigen Speicher 14 und dann von diesem zum Bildschirm-Monitor 13 führen.

Dadurch werden bei Ausfall der Stromversorgung die im Speicher 14 gespeicherten und auf dem Bildschirm-Monitor 13 abrufbaren Zeichen bzw. Worte oder Sätze nicht endgültig gelöscht.

## Patentansprüche

1. Elektronische Vorrichtung zur Willensäusserung durch einzeln ausgewählte Buchstaben, Zahlen und Symbole seitens durch Krankheit oder Verletzung am Sprechen und Schreiben behinderter Personen, die folgende Bauteile umfasst: eine Tafel (10) mit allen Buchstaben des Alphabets und wenigstens den Zahlen von 0 bis 9 sowie weiterer, Symbolen und mit im Bereich der Buchstaben, Zahlen und Symbole jeweils einem elektrisch einschaltbaren und mit zyklisch kontinuierlicher Folge von einem Buchstaben, einer Zahl und einem Symbol zum anderen aufleuchtenden Leuchtmittel (10.1), einen im elektrischen Stromkreis mit der Tafel (10) verbundenen zyklischen Signalgeber (11), einen Sensor (12) zum Schliessen und öffnen des elektrischen Stromkreises, einen nicht-flüchtigen Speicher (14), dadurch gekennzeichnet, dass sie folgende weitere Bauteile umfasst: einen Bildschirm-Monitor (13), der im elektrischen Stromkreis über den Sensor (12) mit dem zyklischen Signalgeber (11) verbunden ist, auf der die durch Betätigen des Sensors (12) gewählten Buchstaben, Zahlen und Symbole aufleuchten und sichtbar verbleiben, wobei dem nicht-flüchtigen Speicher (14) die vorher auf dem Monitor (13) erschienenen und vom selben infolge der Sättigung der Zeile des Monitors (13) allmählich verschwundenen Zeichen sequentiell zugeführt werden und darin gespeichert werden, einen Mehrwegschalter (15), der ebenfalls im elektrischen Stromkreis mit dem nicht-flüchtigen Speicher (14) und dem Bildschirm-Monitor (13) verbunden ist und durch Betätigung des Sensors (12) und Wahl seitens des Patienten eines vorbestimmten Symbols auf der Tafel (10) auf erneutes Aufscheinen auf dem Bildschirm-Monitor (13) der in den nicht-flüchtigen Speicher (14) eingegebenen Buchstaben, Zahlen und Symbole umschaltet, und einen Grosspeicher (16), der im elektrischen Stromkreis mit dem Bildschirm-Monitor (13) und dem Mehrwegschalter (15) verbunden ist, in den bei Sättigung des nicht-flüchtigen Speichers (14) die vom Patienten gewählten und am Bildschirm-Monitor (13) wiedergegebenen Buchstaben, Zahlen und Symbole automatisch einlaufen und darin gespeichert werden, einen im elektrischen Stromkreis zwischen dem Grosspeicher (16) und dem Bildschirm-Monitor (13) liegenden zusätzlichen Sensor (16.1), wobei dieser zusätzliche Sensor (16.1) wahlweise vom Patienten durch Betätigung des Sensors (12) und Wahl eines vorbestimmten Symbols der Tafel (10), aber auch von anderen Personen betätigbar ist, um den erwähnten Stromkreis zu schliessen und die erneute Wiedergabe der in diesem Grosspeicher (16) enthaltenen Buchstaben, Zahlen und Symbole auf dem Bildschirm-Monitor (13) gestattet.

2. Elektronische Vorrichtung nach Anspruch 1, dadurch gekennzeichnet, dass der Sensor (12) ein pneumatischer Sensor ist, dessen elektrischer Kontakt zum öffnen und Schliessen des betreffenden Stromkreises über eine Membran betätigbar ist.

3. Elektronische Vorrichtung nach Anspruch 1, dadurch gekennzeichnet, dass der Sensor (12) als Druckwandler ausgebildet ist und das vom Patienten ausgeübte Drucksignal in ein proportionales elektronisches Signal umwandelt, wobei eventuelle Schwankungen des vom Patienten ausgeübten Drucks derart integriert und filtriert werden, dass ein elektronisches Signal nur dann entsteht, wenn ein voreingestellter Schwellwert des Eingangsdruckes überschritten wird.

4. Elektronische Vorrichtung nach Anspruch 1, dadurch gekennzeichnet, dass der Sensor (12) als Widerstandsdehnungsmesser zum Anbrigen an irgend einen aktiven Muskelbereich des Patienten ausgebildet ist, wobei eventuell das durch Erfassung einer Kontraktion dieses Muskelbereichs des Patienten erzeugte Ausgangssignal mittels eines Verstärkers verstärkt werden kann.

5. Elektronische Vorrichtung nach Anspruch 1, dadurch gekennzeichnet, dass der Sensor (12) als Mikrophon ausgebildet ist, wobei eventuell das durch einen Laut des Patienten erzeugte Ausgangssignal mittels eines Verstärkers verstärkt werden kann.

**Claims**

1. Electronic arrangement for expressing one's will by means of individually selected letters, numbers and symbols on the part of persons handicapped in talking and writing by illness or injury, which arrangement comprises the following components: a board (10) with all the letters of the alphabet and at least the numbers from 0 to 9 and also further symbols, and with, in the region of the letters, numbers and symbols, in each case, one means of lighting (10.1) which can be switched on electrically and lights up with cyclically continuous sequence from one letter, one number and one symbol to the other, a cyclic signal transmitter (11) which is connected with the board (10) in the electrical circuit, a sensor (12) for closing and opening the electrical circuit, a non-volatile memory (14), characterised in that it comprises the following further components: a screen monitor (13), which is connected in the electrical circuit by way of the sensor (12) with the cyclic signal transmitter (11), on which the letters, numbers and symbols selected by actuation of the sensor (12) light up and remain visible, with the characters, which previously appeared on the monitor (13) and gradually disappeared from the same as a result of the saturation of the line of the monitor (13), sequentially being supplied to the non-volatile memory (14) and being stored therein, a multiple way switch (15) which is likewise connected in the electrical circuit with the non-volatile memory (14) and the screen monitor (13) and switches over, as a result of actuation of the sensor (12) and the choice by the patient of a pre-determined symbol on the board (10), to renewed appearance on the screen monitor (13) of the letters, numbers and symbols input into the non-volatile memory (14), and a large capacity memory (16) which is connected in the electrical circuit with the screen monitor (13) and the multiple way switch (15) and into and in which in the case of saturation of the non-volatile memory (14) there automatically run and are stored the letters, numbers and symbols chosen by the patient and reproduced on the screen monitor (13), an additional sensor (16.1) which lies in the electrical circuit between the large capacity memory (16) and the screen monitor (13), in which case this additional sensor (16.1) can be actuated selectively by the patient by actuation of the sensor (12) and choice of a pre-determined symbol of the board (10), but also by other persons, in order to close the electrical circuit mentioned, and permits the renewed reproduction of the letters, numbers and symbols contained in this large capacity memory (16) on the screen monitor (13).

2. Electronic arrangement according to claim 1, characterised in that the sensor (12) is a pneumatic sensor, the electrical contact of which can be actuated for the purpose of opening and closing the relevant electrical circuit by way of a membrane.

3. Electronic arrangement according to claim 1, characterised in that the sensor (12) is formed as a pressure transducer and the pressure signal exerted by the patient is converted into a proportional electronic signal, with possible variations in the pressure exerted by the patient being integrated and filtered in such a way that an electronic signal only results if a preset threshold value of the input pressure is exceeded.

4. Electronic arrangement according to claim 1, characterised in that the sensor (12) is formed as a resistance strain gauge for attachment to any active muscle region of the patient, in which case possibly the output signal generated by detection of a contraction of this muscle region of the patient can be amplified by means of an amplifier.

5. Electronic arrangement according to claim 1, characterised in that the sensor (12) is formed as a microphone, in which case possibly the output signal generated by a sound of the patient can be amplified by means of an amplifier.

**Revendications**

1. Dispositif électronique permettant à une personne ayant perdu la faculté de parler et d'écrire à la suite d'une maladie ou d'un accident, de s'exprimer au moyen de lettres, de chiffres et de symboles pouvant être choisis individuellement, comprenant les éléments suivants : un tableau (10) muni de toutes les lettres de l'alphabet et au moins des chiffres de 0 à 9 ainsi que d'autres symboles, et, au niveau de chaque lettre, chiffre et symbole, d'un témoin lumineux (10.1) pouvant être commandé électriquement et s'allumant, dans un ordre continu et cyclique, d'une lettre, d'un chiffre et d'un symbole à l'autre, un générateur cyclique de signaux (11) connecté au tableau (10) sur le circuit électrique, un capteur (12) pour fermer et ouvrir le circuit électrique, et une mémoire permanente (14), caractérisé en ce qu'il comprend les autres éléments suivants : un moniteur vidéo (13) qui est connecté, sur le circuit électrique, au générateur cyclique de signaux (11) par l'intermédiaire du capteur (12) et sur lequel les lettres, chiffres et symboles choisis par actionnement du capteur (12) s'allument et restent visibles, la mémoire permanente (14) recevant et enregistrant de manière séquentielle les signes apparus précédemment sur le moniteur (13) et disparus progressivement de ce dernier en raison de la saturation de la ligne du moniteur (13), un commutateur à plusieurs directions (15) qui est également connecté, sur le circuit électrique, à la mémoire permanente (14) et au moniteur vidéo (13) et qui, lorsque le capteur (12) est actionné et que le patient choisit un symbole prédéfini sur le tableau (10), permet de faire réapparaître sur le moniteur vidéo (13) les lettres, chiffres et symboles entrés dans la mémoire permanente (14), et une mémoire à grande capacité (16) qui est connectée, sur le circuit électrique, au moniteur vidéo (13) et au commutateur à plusieurs directions (15), et dans laquelle les lettres, chiffres et symboles choisis par le patient et visualisés sur le moniteur vidéo (13) sont automatiquement transférés et enregistrés en cas de saturation de la mémoire permanente (14), un capteur supplémentaire (16.1) implanté sur le circuit électrique entre la mémoire à grande capacité (16) et le moniteur vidéo (13), le capteur supplémentaire (16.1) pouvant être actionné, au choix, par le patient en agissant sur le capteur (12) et en choisissant un symbole prédéfini du tableau (10), mais également par d'autres personnes pour fermer le circuit indiqué et permettre de rappeler sur le moniteur vidéo (13) les lettres, chiffres et symboles contenus dans la mémoire à grande capacité (16).

2. Dispositif électronique conforme à la revendication 1, caractérisé en ce que le capteur (12) est un capteur pneumatique dont le contact électrique destiné à ouvrir et fermer le circuit correspondant peut être actionné par l'intermédiaire d'une membrane.

3. Dispositif électronique conforme à la revendication 1, caractérisé en ce que le capteur (12) est conçu sous la forme d'un convertisseur de pression et convertit la pression exercée par le patient en un signal électronique proportionnel, les éventuelles variations de la pression exercée par le patient étant intégrées et filtrées de façon à ce qu'un signal électronique ne soit produit qu'en cas de dépassement d'une valeur de seuil préréglée de la pression d'entrée.

4. Dispositif électronique conforme à la revendication 1, caractérisé en ce que le capteur (12) est conçu sous la forme d'une jauge de contrainte pouvant être appliquée sur une zone musculaire active quelconque du patient, le signal de sortie produit par la détection d'une contraction de ladite zone musculaire du patient pouvant éventuellement être amplifié au moyen d'un amplificateur.

5. Dispositif électronique conforme à la revendication 1, caractérisé en ce que le capteur (12) est conçu sous la forme d'un microphone, le signal de sortie produit par la détection d'un son du patient pouvant éventuellement être amplifié au moyen d'un amplificateur.

ABCDEFGHIKJLMNOPQRSTUVWXYZ1234567890#αβ/ ///

10

10.1   10.1   10.1   10.1

11

12.1

12

13

14

15   15.2

15.1   15.3

16

16.1